# EUROPÄISCHE PATENTSCHRIFT

(11) **EP 3 944 908 B1**
(45) Veröffentlichungstag und Bekanntmachung des Hinweises auf die Patenterteilung: **21.05.2025**
(21) Anmeldenummer: 21180591.6
(22) Anmeldetag: 21.06.2021
(51) Int. Cl.: B21D 9/01, B29C 53/08, B29C 53/82

(54) **VORRICHTUNG ZUM BIEGEN VON ROHREN**
DEVICE FOR BENDING PIPES
DISPOSITIF DE CINTRAGE DE TUBES

(30) Priorität: 30.07.2020 AT 506472020
(43) Veröffentlichungstag der Anmeldung: 02.02.2022
(73) Patentinhaber: KE KELIT GmbH, 4020 Linz (AT)
(72) Erfinder: Dannerer, Wolfgang, 4101 Feldkirchen an der Donau (AT); Hödl, Harald, 4030 Linz (AT)
(74) Vertreter: Hübscher & Partner Patentanwälte GmbH

(56) Entgegenhaltungen:
- AT-U1- 14 096
- DE-U1- 8 705 586
- US-A- 1 675 574

## Beschreibung

Die Erfindung bezieht sich auf eine Vorrichtung zum Biegen von Rohren mit einer in einem Rohr im Bereich einer zu formenden Biegung platzierbaren Biegespiralfeder, wobei in die Biegespiralfeder eine Seele eingesetzt ist.

Die US 230125 A offenbart eine Vorrichtung zum Biegen von dünnwandigen Rohren. Der Biegedorn ist insbesondere mehrteilig aufgebaut und besteht aus einem Stahlfedermantel, welcher einen Kern oder eine Seele aus Gummi umgibt. Der Stahlfedermantel ist entweder leicht konisch oder aber zylindrisch ausgebildet. Aus der US 2760545 A ist eine Vorrichtung zum Biegen von dünnwandigen Rohren bekannt, wobei in eine äußere Biegespiralfeder eine Seele aus einer inneren Biegespiralfeder eingesetzt ist. Eine Biegespiralfeder kann mit Zugmitteln oder mit einem Schubdraht in einem Rohr im Bereich der zu formenden Biegung platziert werden (AT 14 096 U1).

Die US1675574A, auf welcher der Oberbegriff des Patentanspruchs 1 basiert, offenbart eine Vorrichtung wobei in die Biegespiralfeder ein Zugseil eingesetzt ist. Das Zugseil besteht aus in Zugseillängsrichtung verlaufenden Fasern.

Rohre werden üblicherweise als Meterware gefertigt und müssen an einer Baustelle vor Ort abgelängt und manuell in die gewünschte Form gebogen werden. Für Sanitär- bzw. Heizungsinstallationen werden heutzutage meist Verbundrohre verwendet, die eine Außenschicht aus Kunststoff, eine Mittelschicht aus Aluminium und eine Innenschicht aus Kunststoff aufweisen. Mittlerweile kommen auch kunststoffummantelte dünnschichtige Edelstahlrohre zum Einsatz. Um Rohre, egal welcher Bauart, beim Biegen nicht abzuknicken ist es bekannt, Biegefedern vorzusehen, die eben das Knicken des Rohres beim Biegen im Bereich der Biegestelle vermeiden. Rohre knicken insbesondere bei zu kleinen Biegeradien von < 5-mal dem Rohrdurchmesser. Dazu muss die Biegefeder vor dem Biegevorgang im Rohrinneren in den Bereich der zu fertigenden Biegung geschoben werden.

Solche Biegefedern sind in der Regel rund einen Meter lang und aus Federstahl gefertigt. Sie sind nach Art einer Schraubenfeder aufgebaut, wobei die einzelnen Windungen üblicherweise dicht aneinanderliegen, und der Schraubenfederdraht gegebenenfalls einen rechteckförmigen Querschnitt aufweist, um eine möglichst große Auflagefläche im Rohrinneren zwischen Innenschicht und Biegefeder zu gewährleisten, womit die Rohrinnenoberfläche beim Biegen möglichst geschont werden soll. Nach einem Biegen des Rohres wird die Feder wieder aus dem Rohr herausgezogen. Zu diesem Ein- bzw. Ausziehen der Feder können Zugmittel wie Seile, ein biegesteifer Draht aus Metall oder ein aus der AT 14 096 U1 bekannter Schubdraht verwendet werden. Von Nachteil ist bei den bekannten Vorrichtungen insbesondere, dass die Biegeradien nicht unbedingt sauber begrenzt werden können und dass es bei unsachgemäßer Handhabung, insbesondere beim Aufwenden zu großer Biegeleistungen, also Biegekräften in kurzer Biegezeit, dennoch zu einem Einknicken der Rohre im Bereich der Biegestelle kommt.

Ausgehend von einem derartigen Stand der Technik liegt der Erfindung die Aufgabe zugrunde, eine Vorrichtung zum Biegen von Rohren anzugeben, mit der die Knicksicherheit erhöht werden kann und mit der Biegeradien, insbesondere beim manuellen Biegen der Rohre, begrenzt werden können. Die Erfindung löst die gestellte Aufgabe dadurch, dass die Seele aus in Seelenlängsrichtung verlaufenden Fasern besteht und derart ausgebildet ist, dass sie ein radiales Ausweichen der Biegespiralfeder beim Biegen und somit ein Knicken unterbindet.

Durch das Zusammenspiel von Biegespiralfeder und Seele kann die Knicksicherheit erhöht und können Biegeradien begrenzt werden. Die Seele unterbindet ein radiales Ausweichen der Biegespiralfeder beim Biegen und somit ein Knicken. Zudem bleibt die Vorrichtung leicht im zu biegenden Rohr plazierbar und kann auch nach einem Biegen wieder einfach entnommen werden. Mit der Biegesteifigkeit der Seele kann die gewünschte Biegeradienbegrenzung eingestellt werden.

Die Seele besteht aus in Seelenlängsrichtung verlaufenden Fasern, insbesondere Glas-, Karbon-, Basalt oder Metallfasern. Die Fasern bilden ein kompaktes, radial hoch belastbares Paket und erlauben bei entsprechender Wahl der Faserparameter, wie Zugfestigkeit und Durchmesser, eine verbesserte Einstellbarkeit der Biegeradienbegrenzung. Der Einfachheit halber kann die Seele ein, insbesondere metallisches, Seil aufweisen oder sein.

Zur Erhöhung der Standfestigkeit, der Seele ist es von Vorteil, wenn die Seele außenumfänglich eine Kunststoffummantelung, insbesondere aus abriebfestem Kunststoff, aufweist. Dies vermindert auch die Reibung zwischen Seele und Biegespiralfeder, was eine Entnahme nach erfolgtem Biegeprozess begünstigt, da die Feder bei entsprechender Dimensionierung nach wie vor in Grenzen auf der Seele axial gedehnt werden kann.

Ebenso kann die Seele ein Kunststoffstab sein und/oder aus faserverstärktem Kunststoff besteht, also eine aus in Seelenlängsrichtung verlaufenden Fasern bestehende Seele in Kunststoff, Kunstharz od. dgl. eingebettet sein.

Nach einer Weiterbildung der Erfindung kann die Seele zu einem Schubdraht verlängert sein, mit dem die Biegespiralfeder im Bereich der zu formenden Biegung platzierbar ist. Eine gesonderte Anbindung der Biegespiralfeder an die Seele ist damit nicht mehr notwendig. Zudem ist eine knicksichere Anbindung des Schubdrahtes an die Biegespiralfeder gegeben.

Ebenso können die Seele bzw. der Schubdraht aus füllstoffverstärktem Kunststoff, insbesondere aus mit mineralischen Füllstoffen verstärktem Kunststoff, bestehen, womit der E-Modul und die Steifigkeit des Schubdrahtes eingestellt werden kann. Zudem kann der Schubdraht ebenso wie die Seele einen Kern aus Fasern aufweisen. Damit ist sichergestellt, dass die für ein ordnungsgemäßes Hantieren erforderlichen Schub- und Zugkräfte sicher aufgenommen und problemlos auf die Biegespiralfeder übertragen werden können. Beschädigungen des Rohrinnenmantels durch unsachgemäße Befestigung des Schubdrahtes an der Biegefeder können damit von vorne herein vermieden werden.

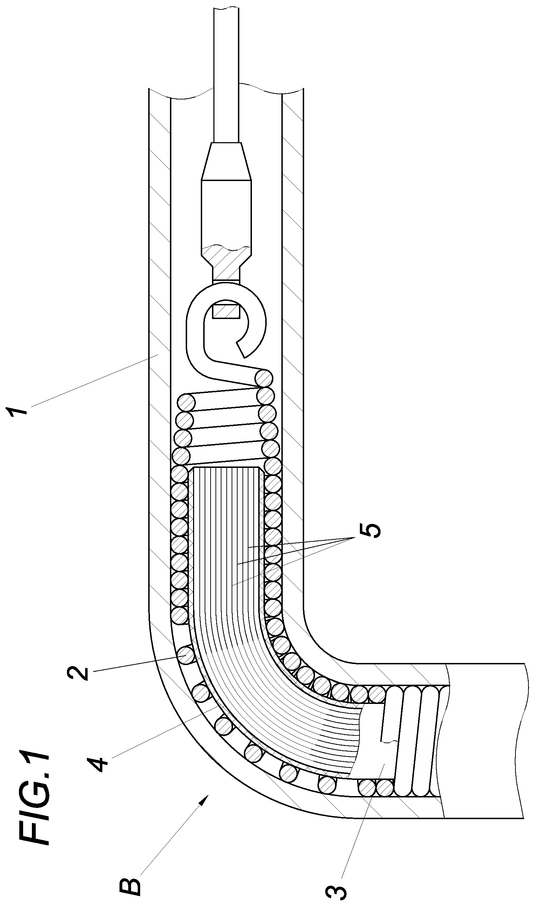

In der Zeichnung ist der Erfindungsgegenstand beispielsweise dargestellt. Es zeigen
- Fig. 1: eine in einem Rohr im Bereich einer zu formenden Biegung platzierte Biegespiralfeder mit Seele im teilgeschnittenen Längsschnitt und
- Fig. 2: eine Konstruktionsvariante der Vorrichtung aus Fig. 1 mit einer zu einem Schubdraht verlängerten Seele.

Die Vorrichtung zum Biegen von Rohren 1 umfasst eine in einem Rohr 1 im Bereich einer zu formenden Biegung B platzierbare Biegespiralfeder 2, wobei in die Biegespiralfeder 2 eine Seele 3 eingesetzt ist.

Zum Biegen eines Rohres wird die Biegespiralfeder 2 zunächst im Bereich einer zu formenden Biegung B eines vorerst noch geraden Rohres 1 platziert und das Rohr im Anschluss daran manuell mit den Händen um den gewünschten Winkel gebogen. Abschließend wird die Biegespiralfeder 2 wieder aus dem Rohr 1 entnommen.

Die Seele 3 weist außenumfänglich eine Kunststoffummantelung 4, insbesondere aus abriebfestem Kunststoff, auf. Die Biegespiralfeder 2 liegt an der Kunststoffummantelung 4 der Seele 3 an bzw. auf.

Die Seele besteht aus in Seelenlängsrichtung 5 verlaufenden Fasern, gegebenenfalls eines Seiles, insbesondere Glas-, Karbon-, Basalt oder Metallfasern die gegebenenfalls in eine Kunststoff- bzw. Kunstharzmatrix od. dgl. eingebettet sind.

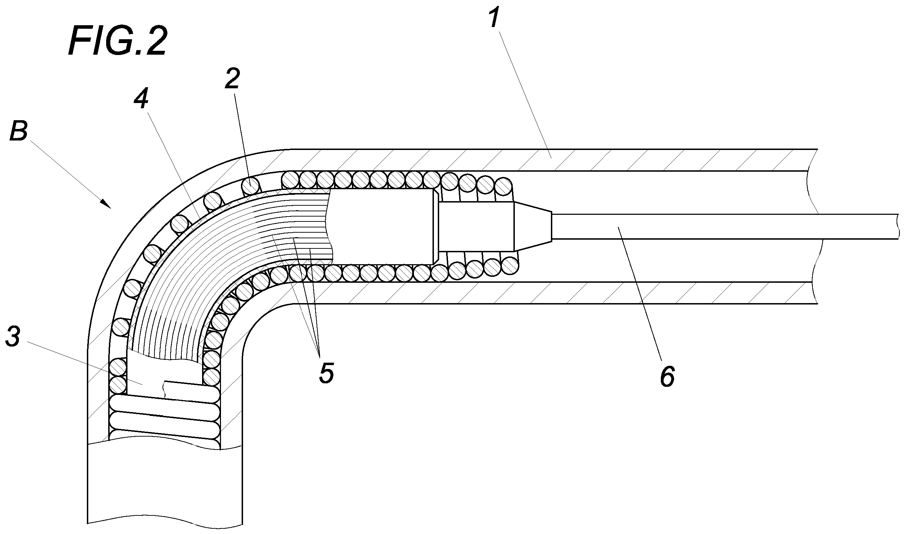

Gemäß der Konstruktionsvariante nach Fig. 2 ist die Seele 3, zumindest ein Kern der Seele 3, zu einem Schubdraht 6 verlängert, mit dem die Biegespiralfeder 2 im Bereich der zu formenden Biegung platzierbar ist.

## Patentansprüche

1. Vorrichtung zum Biegen von Rohren (1) mit einer in einem Rohr (1) im Bereich einer zu formenden Biegung platzierbaren Biegespiralfeder (2), wobei in die Biegespiralfeder (2) eine Seele (3) eingesetzt ist, **dadurch gekennzeichnet, dass** die Seele (3) aus in Seelenlängsrichtung (5) verlaufenden Fasern besteht und derart ausgebildet ist, dass sie ein radiales Ausweichen der Biegespiralfeder (2) beim Biegen und somit ein Knicken unterbindet.

2. Vorrichtung nach Anspruch 1, **dadurch gekennzeichnet, dass** die Seele (3) außenumfänglich eine Kunststoffummantelung (4), insbesondere aus abriebfestem Kunststoff, aufweist.

3. Vorrichtung nach Anspruch 1 oder 2, **dadurch gekennzeichnet, dass** die Seele (3) aus Glas-, Karbon-, Basalt oder Metallfasern besteht.

4. Vorrichtung nach einem der Ansprüche 1 bis 3, **dadurch gekennzeichnet, dass**, die Seele (3) ein, insbesondere metallisches, Seil aufweist.

5. Vorrichtung nach einem der Ansprüche 1 oder 2, **dadurch gekennzeichnet, dass**, die Seele (3) ein Kunststoffstab ist und/oder aus faserverstärktem Kunststoff besteht.

6. Vorrichtung nach einem der Ansprüche 1 bis 5, **dadurch gekennzeichnet, dass**, die Seele (3) zu einem Schubdraht (6) verlängert ist, mit dem die Biegespiralfeder (2) im Bereich der zu formenden Biegung platzierbar ist.

## Claims

1. A device for bending tubes (1), comprising a spiral bending spring (2) placeable in a tube (1) in the region of a bend to be formed, whereby a core (3) is inserted into the spiral bending spring (2), **characterized in that** the core (3) consists of fibres oriented in the longitudinal direction (5) of the core and is configured in such a way that it prevents the spiral bending spring (2) from moving radially during bending and thus from buckling.

2. A device according to claim 1, **characterized in that** the core (3) has a plastic sheathing (4), in particular made of abrasion-resistant plastic, on its outer circumference.

3. A device according to claim 1 or 2, **characterized in that** the core (3) consists of glass, carbon, basalt or metal fibres.

4. A device according to one of claims 1 to 3, **characterized in that** the core (3) comprises a, in particular metallic, cable.

5. A device according to one of claims 1 or 2, **characterized in that** the core (3) is a plastic rod and/or consists of fibre-reinforced plastic.

6. A device according to one of claims 1 to 5, **characterized in that** the core (3) is extended to form a push wire (6) with which the spiral bending spring (2) can be placed in the area of the bend to be formed.

## Revendications

1. Dispositif pour plier des tubes (1) avec un ressort spiral de pliage (2) pouvant être placé dans un tube (1) dans la zone d'un pliage à former, une âme (3) étant insérée dans le ressort spiral de pliage (2), **caractérisé en ce que** l'âme (3) est constituée de fibres s'étendant dans le sens longitudinal de l'âme (5) et est conçue de telle sorte qu'elle empêche le ressort spiralé de flexion (2) de s'écarter radialement lors de la flexion et donc de se plier.

2. Dispositif selon la revendication 1, **caractérisé en ce que** l'âme (3) présente un revêtement extérieur en plastique (4), en particulier en plastique résistant à l'abrasion.

3. Dispositif selon la revendication 1 ou 2, **caractérisé en ce que** l'âme (3) est constituée de fibres de verre, de carbone, de basalte ou de métal.

4. Dispositif selon l'une des revendications 1 à 3, **caractérisé en ce que** l'âme (3) comporte un câble, en particulier métallique.

5. Dispositif selon l'une des revendications 1 ou 2, **caractérisé en ce que** l'âme (3) est une tige en plastique et/ou est constituée de plastique renforcé de fibres.

6. Dispositif selon l'une des revendications 1 à 5, **caractérisé en ce que** l'âme (3) est prolongée par un fil de poussée (6) permettant de placer le ressort spiralé (2) dans la zone de la courbure à former.
